# FASCICULE DE BREVET EUROPEEN

(11) **EP 1 453 283 B1**
(45) Date de publication et mention de la délivrance du brevet: **15.12.2010**
(21) Numéro de dépôt: 04290271.8
(22) Date de dépôt: 02.02.2004
(51) Int. Cl.: H04M 1/64, H04M 1/663

(54) **Système de gestion d'appels téléphoniques entrants**
System zur Verwaltung ankommender Telefonanrufe
System for managing incoming telephone calls

(30) Priorité: 28.02.2003 FR 0302516
(43) Date de publication de la demande: 01.09.2004
(73) Titulaire: FRANCE TELECOM, 75015 Paris (FR)
(72) Inventeur: Baudo, Béatrice, 38190 Bernin (FR); Herledan, Frédéric, 38240 Meylan (FR); Le Maire, Claude, 38190 Laval (FR)
(74) Mandataire: Hassine, Albert

(56) Documents cités:
- EP-A- 0 957 622
- WO-A-01/82572
- WO-A1-01/78364
- FR-A- 2 810 487
- US-A1- 2002 068 597
- US-A1- 2002 154 752

## Description

L'invention concerne une gestion automatisée d'appels téléphoniques entrants.

La fonction de répondeur téléphonique, largement répandue aujourd'hui, est bien appréciée du grand public. Elle permet à un appelant d'être informé de l'absence du destinataire recherché pour l'appel. Si le répondeur est en outre équipé d'un enregistreur, l'appelant peut enregistrer, sur demande du répondeur, un message sonore informant du motif de l'appel, en particulier en cas d'urgence. Inversement, le destinataire de l'appel peut utiliser le répondeur/enregistreur pour "*filtrer*" les appels et sélectionner ainsi les correspondants avec lesquels il désire réellement communiquer. Cette fonction de répondeur/enregistreur est assurée par des appareils domestiques ou encore des messageries vocales disponibles sur les réseaux de télécommunications mobiles ou fixes.

Toutefois, même si une telle fonction connue est d'utilisation largement répandue auprès du grand public, elle s'adapte mal aux besoins des professionnels, notamment aux besoins des professionnels de santé.

Dans une approche séduisante, le document WO 01/99397 de la Demanderesse propose un système d'accueil téléphonique automatisé d'appels entrants, dans lequel un destinataire des appels met à jour régulièrement un agenda électronique pour informer ses correspondants, par un répondeur vocal, sur les raisons de son indisponibilité et donner des indications du lieu où il se situe actuellement.

L'utilisation d'un tel système d'accueil s'est avérée très prometteuse mais sensiblement contraignante pour l'utilisateur du système, lequel, doit systématiquement mettre à jour son agenda.

L'un des buts de la présente invention est de proposer une gestion d'appels entrants permettant d'accueillir les appels en délivrant automatiquement des messages préexistants mais adaptés à une activité en cours du destinataire.

Un autre but de la présente invention est de proposer une gestion d'appels entrants permettant de différencier ces appels selon leur motif (appels professionnels, appels personnels, appels urgents) et/ou selon l'appelant.

Un autre but de la présente invention est de proposer une gestion d'appels entrants permettant d'aiguiller des appels vers les terminaux téléphoniques adéquats selon la nature de l'appel.

On connaît dans l'art antérieur les documents:
- FR 2 810 487 qui divulgue de router les appela pour des appelants spécifiques ou de délivrer des messages préprogrammés aux autres appelants (page 5, lignes 14 26), mais qui ne divulgue pas de délivrer des messages fonction à la fois de l'état de disponibilité et de l'identifiant de l'appelant,
- et US-2002/154752 qui**,** quant à lui, ne divulgue en rien une quelconque prise en compte d'un numéro d'appelant.

L'invention propose un système de gestion d'appels téléphoniques entrants selon la revendication 1.

Ainsi, selon un avantage que procure la présente invention, des messages d'annonces vocales préenregistrés peuvent être diffusés chacun à la fois en fonction d'un état de disponibilité particulier sélectionné par le destinataire des appels, mais aussi en fonction de l'identifiant du numéro d'appelant.

Le module de sélection peut alors être programmé préalablement à un appel, ou encore commandé par l'utilisateur du système au sens de l'invention pendant la réception même d'un appel. Ainsi, selon l'un des avantages que procure La présente invention, dans le premier cas d'une programmation préalable, le message d'annonce vocale diffusé pourra simplement consister en un message d'informations générales telles que les horaires d'ouverture d'un bureau du destinataire ou autres, tandis que dans le second cas d'une commande du module de sélection pendant l'appel, le message d'annonce vocale diffusé pourra consister en une indication d'un rendez-vous en cours de l'utilisateur, ou encore d'une consultation en cours pour un professionnel de santé.

Dans un mode de réalisation préféré, le système comporte en outre un organe de commande du module de sélection, activable à distance par un utilisateur du système de gestion.

Avantageusement, en complément de messages d'annonces vocales du type précité, le module mémoire comporte en outre au moins un jeu de données d'instructions du module d'aiguillage, stocké en correspondance d'un état de disponibilité, et le module de décision est agencé pour coopérer avec le module d'aiguillage pour simuler une occupation ou une non réponse de la ligne téléphonique en fonction d'un état de disponibilité sélectionné correspondant. Dans ce cas, la communication téléphonique est interrompue, ce qui peut être interprété par l'appelant comme un état de présence du destinataire mais d'indisponibilité totale.

En complément ou en variante, le module de décision est agencé pour coopérer avec le module d'aiguillage pour désactiver le module d'accueil vocal en fonction d'un état de disponibilité sélectionné correspondant. Dans ce cas, le poste de l'appelé émet un signal sonore jusqu'à ce que l'appelé décroche le combiné de son poste.

En complément ou en variante, en fonction de l'état de disponibilité sélectionné par le destinataire, le système peut simuler un appel sans réponse sans toutefois que le poste du destinataire ne signale cet appel. Dans ce cas, l'appelant entend dans son combiné téléphonique un signal sonore correspondant à un appel sans réponse, ce qui peut être interprété par l'appelant comme un état d'absence et d'indisponibilité totale du destinataire.

Selon une caractéristique avantageuse, le système de l'invention comporte en outre un module d'identification de numéros d'abonnés d'appels entrants. La table de correspondance comprend au moins un numéro d'abonné, stocké en correspondance d'au moins un état de disponibilité. Le module de décision est alors agencé pour piloter le module d'aiguillage et/ou le module d'accueil vocal en fonction du numéro d'abonné d'un appel entrant et d'un état de disponibilité sélectionné correspondant.

Ainsi, selon un autre avantage que procure la présente invention, les messages d'annonces vocales préenregistrés peuvent être diffusés chacun en fonction de l'identité de l'appelant. Typiquement, pour un appel personnel identifié grâce à la table du module mémoire, le message d'annonce ne donnera pas les horaires d'ouverture du bureau du destinataire mais pourra plutôt orienter l'appel vers un numéro d'abonné d'un terminal personnel à disposition par exemple du destinataire des appels.

Avantageusement, le système de l'invention comporte un moyen de signalisation, auditive et/ou visuelle, du numéro d'abonné d'un appel entrant, de sorte que le destinataire de l'appel, connaissant l'identité de l'appelant, peut activer dynamiquement le module de décision pour donner une suite à l'appel entrant.

A cet effet, le système selon l'invention comporte avantageusement un module de pilotage dynamique pour activer dynamiquement le module de décision, sur commande du destinataire pour donner une suite audit appel entrant.

Selon une autre caractéristique avantageuse, le système comporte en outre un module d'enregistrement de messages d'appelants. Dans cette réalisation, le module mémoire comporte en outre au moins un jeu de données d'instructions du module d'aiguillage, stocké en correspondance d'un état de disponibilité et le module de décision est agencé pour coopérer avec le module d'aiguillage pour activer :
- dans un premier temps, le module d'accueil vocal en fonction d'un état de disponibilité sélectionné et correspondant à l'identifiant d'un message d'annonce vocale invitant l'appelant à enregistrer un message sonore,
- et, dans un second temps, le module enregistreur pour enregistrer ledit message sonore de l'appelant.

Selon une autre caractéristique avantageuse, le système comporte un serveur vocal interactif. A cet effet, le module mémoire comporte en outre une pluralité de jeux de données d'instructions du module d'aiguillage, stockés en correspondance d'au moins un état de disponibilité et d'une pluralité d'identifiants de codes prédéterminés respectifs et le module de décision est agencé pour coopérer avec le module d'aiguillage :
- pour orienter l'appel entrant, dans un premier temps, vers le module d'accueil vocal en fonction d'un état de disponibilité sélectionné et correspondant à l'identifiant d'un message d'annonce vocale invitant un appelant à formuler un choix parmi une liste de choix possibles et correspondant à un code sélectionné parmi lesdits codes prédéterminés,
- et pour activer, dans un second temps, un jeu d'instructions correspondant audit code sélectionné.

Ce choix peut être introduit par l'appelant en composant un code prédéterminé sur le clavier de son terminal téléphonique, ou encore en prononçant simplement ce code, le système selon l'invention comportant avantageusement un module de reconnaissance vocale.

Dans une réalisation particulièrement avantageuse, le serveur vocal interactif permet une prise de rendez-vous automatisée. A cet effet, la liste de choix possibles précitée correspond à une liste de plages horaires libres du destinataire de l'appel, et l'activation du jeu d'instructions correspondant au code sélectionné comprend la mémorisation dans le module mémoire d'une plage horaire sélectionnée et réservée par l'appelant.

Selon une autre caractéristique avantageuse, le système de l'invention comporte en outre un module de renvoi automatique d'appels. A cet effet, le module mémoire comporte en outre au moins un jeu de données d'instructions du module de renvoi automatique d'appels. La table de correspondance précitée comprend au moins un identifiant d'un numéro d'abonné d'un terminal distant et stocké en correspondance d'un état de disponibilité. Le module de décision est alors agencé pour coopérer avec le module de renvoi automatique d'appels pour renvoyer un appel entrant vers un terminal distant en fonction d'un état de disponibilité sélectionné correspondant.

Cette dernière réalisation se combine avantageusement avec celle implémentant un serveur vocal interactif, notamment dans le cas où un appelant souhaitant joindre un prestataire habituel mais actuellement indisponible demande à être orienté vers un collègue, un confrère, ou encore un assistant prédéterminés de ce prestataire.

Avantageusement, le système selon l'invention comporte en outre un module de paramétrage de données mémorisées dans la table de correspondance, que l'utilisateur du système peut activer pour modifier ces données.

Bien entendu, on comprendra que le module mémoire ci-avant peut se présenter sous une forme unique, mais aussi sous la forme d'une pluralité de modules mémoire assurant chacun une ou plusieurs des fonctions décrites ci-avant (notamment la mémorisation des messages d'annonces vocales, mémorisation d'une liste de numéros d'abonnés appelants sélectionnés, mémorisation d'au moins un numéro de terminal distant pour le renvoi d'appel, mémorisation des plages horaires libres du destinataire, stockage des applications logicielles pour la mise en oeuvre automatique des fonctions du système, et autres). On comprendra en outre que les modules précités, hormis le module mémoire, peuvent se présenter sous la forme de jeux d'instructions mémorisées dans le module mémoire et agencées pour être exécutées sur commande, comme un programme d'ordinateur.

D'autres caractéristiques et avantages de l'invention apparaîtront à l'examen de la description détaillée ci-après, et des dessins annexés sur lesquels :
- la figure 1A est une vue d'ensemble du système au sens de la présente invention ;
- la figure 1B représente schématiquement le contenu de l'unité centrale UC du micro-ordinateur PC de la figure 1A ;
- la figure 2A représente, dans un premier mode de réalisation, une interaction entre les différents modules précités ;
- la figure 2B représente schématiquement les différentes étapes de la suite donnée à un appel entrant, selon la disponibilité programmée par l'utilisateur du système comportant les modules tels que représentés dans la figure 2A ;
- la figure 3A représente, selon un seconde mode de réalisation, une interaction entre différents modules ;
- la figure 3B représente schématiquement les différentes étapes de la suite donnée à un appel entrant, selon la disponibilité programmée par l'utilisateur du système comportant les modules tels que représentés dans la figure 3A ;
- la figure 3C représente schématiquement une variante de l'ensemble des étapes représentées sur la figure 3B, pour une suite donnée à un appel entrant, selon une autre disponibilité programmée par l'utilisateur du système comportant les modules tels que représentés dans la figure 3A ;
- la figure 4 représente, dans un troisième mode de réalisation, résultant de la combinaison des premier et second modes de réalisation ci-avant, une interaction entre les différents modules précités ;
- les figures 5A, 5B et 5C représentent schématiquement une table de correspondance TC, dans laquelle ont été mémorisées des identifiants de disponibilité "*DISPO*" respectifs.

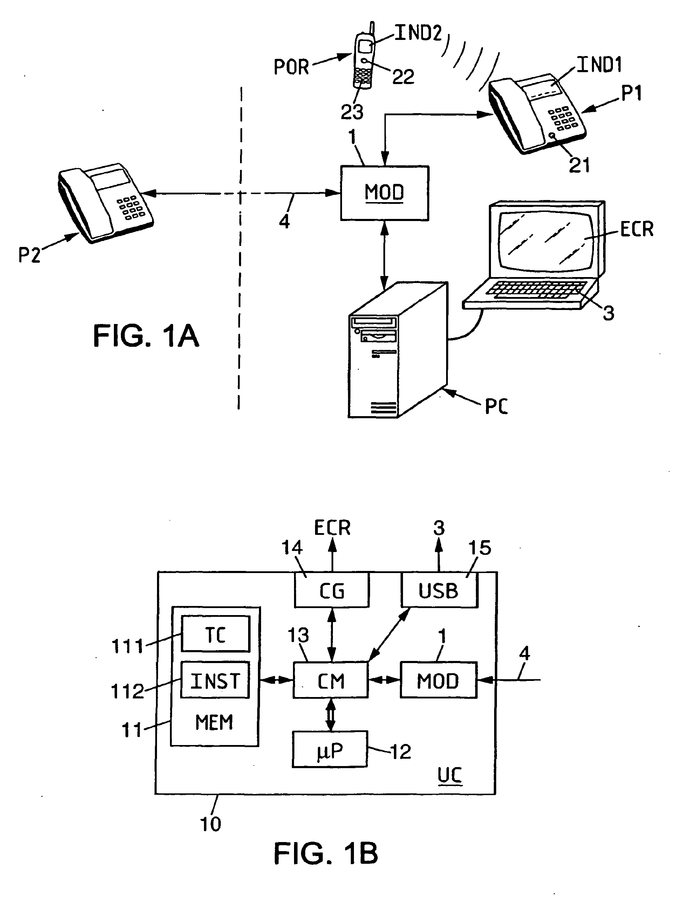

On se réfère tout d'abord à la figure 1 sur laquelle un poste téléphonique P1 est relié à un modem 1, lequel est connecté à une ligne téléphonique 4 pour communiquer avec d'autres postes P2 via le réseau téléphonique commuté. On entend par le terme "*modem*" un appareil modem externe ou une carte électronique capable de dialoguer avec le réseau téléphonique et pilotée par un micro-ordinateur PC, ou encore avantageusement un modem vocal. Ainsi, on comprendra que le modem 1 peut être intégré directement au micro-ordinateur PC, comme on le verra plus loin. Le micro-ordinateur PC comporte en outre un écran ECR pour visualiser, par exemple, l'agenda numérique de l'utilisateur ou encore une liste de numéros d'abonnés pour lesquels l'utilisateur souhaite donner une suite choisie à un appel issu de l'un de ces numéros d'abonnés. Le micro-ordinateur PC comporte en outre un organe de saisie, tel qu'un clavier 3, par exemple pour saisir de nouveaux numéros d'abonnés, ou encore pour modifier des plages horaires libres sur l'agenda numérique précité. Le poste de téléphone P1 comporte avantageusement un écran d'affichage du numéro d'abonné appelant (poste P2 dans l'exemple représenté sur la figure 1A), portant la référence IND1. Cette fonction, connue en soi, est largement implémentée dans les postes téléphoniques actuels. Le poste téléphonique P1 comporte en outre un organe de commande 21 pour prendre directement une communication, sans passer par un répondeur/enregistreur. En outre, un simple décrochement du combiné permet de prendre la communication.

En complément ou en variante, le système selon l'invention comporte avantageusement un organe de commande portatif POR, à disposition de l'usager, comportant, d'une part, un écran IND2 pour indiquer le numéro d'abonné appelant, et, d'autre part, un bouton de commande 22 pour prendre un appel entrant sans passer par la fonction répondeur/enregistreur du système selon l'invention. Avantageusement, l'organe de commande POR comporte en outre un clavier 23 permettant à l'utilisateur de sélectionner un état de disponibilité qu'il choisit. Préférentiellement, l'organe de commande portatif POR est agencé pour communiquer à distance avec le micro-ordinateur PC, ou encore avec le poste téléphonique P1, par exemple par une liaison infrarouge, ou encore une liaison de type "*BLUETOOTH*" ou autre, ce qui permet à l'utilisateur d'activer/désactiver la fonction répondeur/enregistreur, ou encore de modifier l'état de disponibilité mémorisé dans une mémoire du micro-ordinateur PC, comme on le verra plus loin.

En se référant à la figure 1B, le micro-ordinateur PC comporte une unité centrale 10 (UC) dans laquelle une carte mère 13 (CM) est agencée pour communiquer, de façon connue en soi, avec un processeur 12 (*µ*P), avec le modem précité 1, avec une mémoire 11 correspondant au module mémoire précité (MEM), avec une carte graphique 14 (CG) et avec un port USB 15. La carte graphique 14 est reliée à l'écran ECR, pour la commande de la visualisation des données graphiques sur cet écran. Le port USB 15 est relié au clavier 3, pour le transfert de données saisies et leur mémorisation. La mémoire 11 comporte avantageusement une première zone 111, dans laquelle est stockée la table de correspondance précitée TC. Dans cette zone mémoire 111, les données peuvent être stockées de façon rangée, en fonction des adresses mémoires qu'elle comporte. Avantageusement, la mémoire 11 comporte en outre une seconde zone 112, comportant des instructions programme pour dérouler des applications logicielles que met en oeuvre le système selon l'invention, comme on le verra plus loin. En particulier, on comprendra que les différents modules précités (de sélection, d'aiguillage, de décision, etc.) sont réalisés sous la forme d'applications logicielles dont les instructions sont mémorisées dans cette seconde zone mémoire 112.

Bien entendu, on comprendra que la mémoire MEM peut avantageusement stocker en outre des messages d'accueil vocal, par exemple sous la forme de fichiers AUDIO ou encore les messages vocaux laissés par les appelants, comme on le verra plus loin. Dans une variante avantageuse, le modem est un modem vocal dans une mémoire duquel sont enregistrés lesdits messages d'accueil et/ou les messages des appelants.

Dans ce qui suit, on décrit une mise en oeuvre de l'invention dédiée à des professionnels de la santé (médecins, kinésithérapeutes, ou autres). Toutefois, on comprendra que la présente invention peut bien entendu aussi s'appliquer à d'autres domaines professionnels différents, ou encore pour des usages domestiques privés.

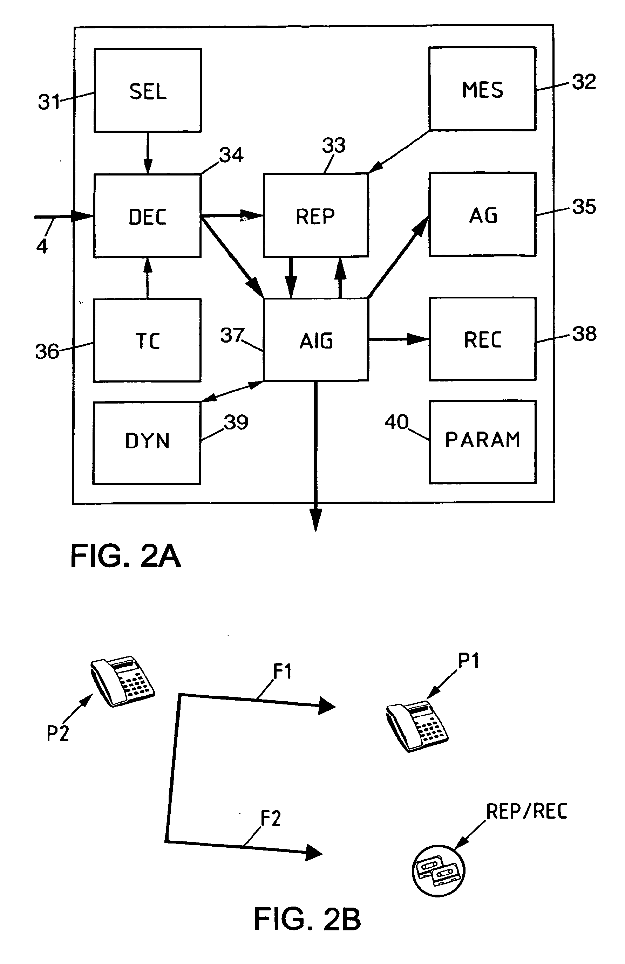

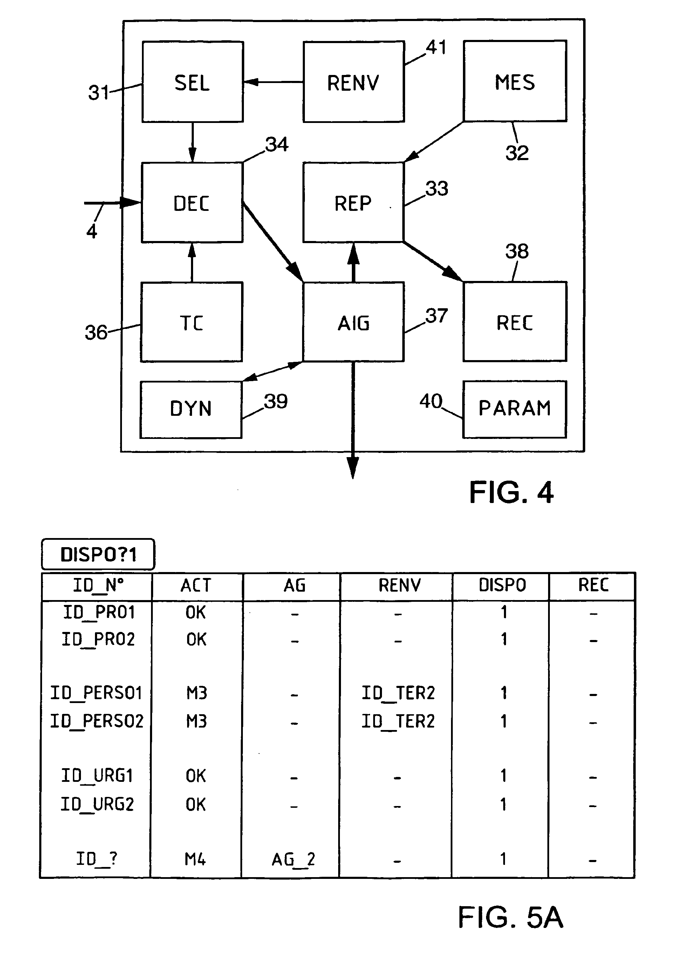

On se réfère maintenant à la figure 2A, sur laquelle le système selon l'invention met en oeuvre une pluralité de modules, dont :
- un module de gestion de la disponibilité de l'utilisateur 31 correspondant au module de sélection précité (SEL) ;
- un module de gestion des annonces 32 comportant ladite pluralité de messages d'annonces vocales précité (MES) ;
- un module de gestion du contexte 34 correspondant au module de décision précité (DEC) ;
- un module d'accueil vocal 33 (REP) ;
- un module de prise de rendez-vous automatique 35 comprenant la liste précitée de plages horaires libres de l'utilisateur du système (AG) ;
- un module de gestion des contacts 36 correspondant à la table de correspondance précitée (TC) ;
- un module d'aiguillage 37 (AIG) ;
- un module d'enregistrement des messages 38 correspondant au module enregistreur précité (REC) ;
- un module de pilotage dynamique 39 (DYN) pour activer dynamiquement le module de décision 34 ; et
- un module de paramétrage 40 (PARAM) permettant à l'utilisateur du système selon l'invention de modifier les paramètres mémorisés dans la table de correspondance TC, comme on le verra plus loin, en référence aux figures 5A à 5C.

Le module de gestion de disponibilité 31 permet à l'utilisateur de spécifier un état de disponibilité choisi. Les états de disponibilité peuvent être finis et discrets (comme par exemple : disponible, peu disponible, indisponible) ou encore paramétrables à volonté par l'utilisateur, à partir du module de paramétrage 40. L'utilisateur spécifie explicitement son état de disponibilité, dans une réalisation particulière. En variante, le module de gestion de disponibilité 31 peut coopérer avec la mémoire MEM du micro-ordinateur PC, de manière à consulter un agenda électronique stocké dans ladite mémoire MEM et, en fonction des données mémorisées sous forme d'agenda électronique (par exemple un fichier éditable par un tableur), le module de gestion de disponibilité 31 déduit un état de disponibilité de l'utilisateur (par exemple, dans le cas de professionnels de santé, un instant correspondant à une plage horaire pendant laquelle le professionnel de santé est en consultation, ou encore à l'extérieur, par exemple s'il exerce en outre dans un hôpital).

Le module de gestion du contexte 34 définit le contexte d'un appel entrant (identité de l'appelant, heure de l'appel, ou autre). Par exemple, il reçoit un signal d'identification du numéro d'abonné de l'appelant et peut agir ainsi en tant que module d'identification de numéros d'abonnés d'appels entrants pour le système au sens de l'invention. Par ailleurs, en fonction de la disponibilité de l'utilisateur indiquée par le module 31, le module de gestion du contexte 34 oriente l'appel vers le module d'accueil vocal 33 (appels filtrés), ou encore vers le module d'aiguillage 37 (appels passés), pour suite à donner à l'appel.

Le module d'accueil vocal 33 délivre, quant à lui, un message d'accueil vocal à l'appelant en fonction du contexte de l'appel (disponibilité de l'appelé, identité de l'appelant, ou autre). En fonction de ce contexte, le module d'accueil vocal 33 comporte des instructions pour délivrer un message sonore à l'appelant et/ou enregistrer un message de l'appelant et/ou transférer l'appel vers un module de prise de rendez-vous automatique 35, via le module d'aiguillage 37. Bien entendu, dans une variante moins sophistiquée, ce module 33 peut être remplacé par un dispositif externe ou une société de télé-secrétariat.

Le module de gestion des annonces 32 permet à l'utilisateur de préparer différentes annonces vocales qui seront délivrées par le module d'accueil 33, en fonction du contexte d'appel.

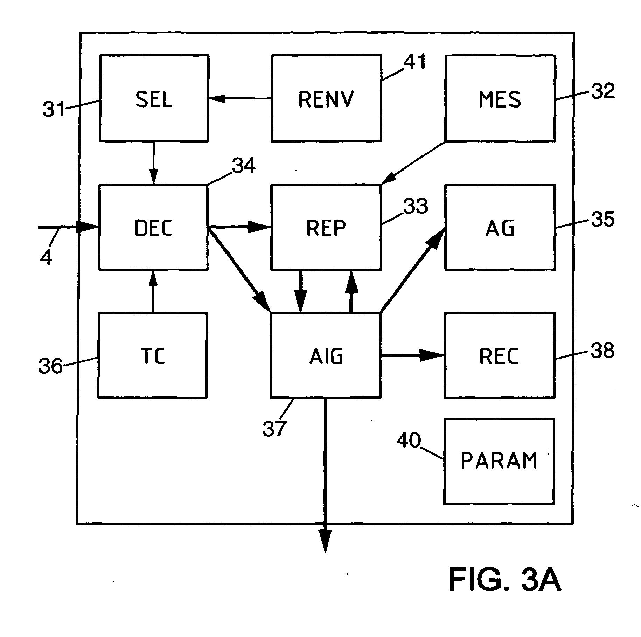

Le module d'aiguillage 37 oriente l'appel vers un module interne, tel que le module d'enregistrement des messages 38, ou encore vers le module de prise de rendez-vous automatique 35, dans ce premier mode de réalisation. Il peut aussi orienter l'appel vers un autre poste téléphonique (par exemple un terminal mobile de l'utilisateur, ou encore un poste de secrétariat à distance, ou encore vers le poste téléphonique d'un collègue ou d'un confrère) en tenant compte d'éventuels renvois d'appels programmés au préalable, comme on le verra en référence au second mode de réalisation de la figure 3A. Pour décider de l'orientation de l'appel, le module DEC tient compte du contexte de l'appel défini par le module de gestion du contexte 34 et de l'information de la suite à donner à l'appel que fournit le module d'accueil vocal 33. Par exemple, si l'appel est orienté vers un poste téléphonique qui ne répond pas, ou encore dont la ligne est occupée, le module d'aiguillage 37 peut être agencé pour réorienter l'appel vers un autre poste ou vers le module d'accueil vocal 33 qui délivre alors un message indiquant l'impossibilité de joindre l'utilisateur du système.

Le module de paramétrage 40 permet à l'utilisateur de contrôler finement le fonctionnement du système en activant ou désactivant différents modules et/ou en paramétrant le fonctionnement de chaque module (par exemple en actualisant manuellement son agenda électronique pour la prise de rendez-vous automatique effectuée par le module 35, ou encore en modifiant la liste des numéros d'abonnés choisis). En particulier, le module de paramétrage 40 permet à l'utilisateur de modifier les données de la table de correspondance précitée, par exemple de modifier le message à diffuser pour un appel provenant d'un numéro d'abonné identifié et correspondant à un état de disponibilité particulier. La réalisation du paramétrage peut, par exemple, s'effectuer comme suit :
- l'utilisateur peut obtenir un comportement de répondeur simple en désactivant le module d'enregistrement des messages et en déclarant une indisponibilité (par exemple consultation délicate en .cours, départ en vacances, ou autre) ;
- l'utilisateur peut obtenir un comportement de répondeur dédié à la prise de rendez-vous, en désactivant le module d'accueil et en paramétrant son indisponibilité, comme on le verra plus loin ;
- en paramétrant sa disponibilité totale, tous les appels peuvent être orientés vers l'utilisateur. Par exemple, en utilisant le module de pilotage dynamique 39, il peut sélectionner lui-même les appels auxquels il souhaite répondre et ceux qu'il préfère laisser prendre en charge par le module d'accueil vocal 33.

Le module de pilotage dynamique 39 reçoit une information donnée par le module d'aiguillage 37, lorsque ce dernier doit orienter l'appel vers l'utilisateur. En particulier, ce module 39 permet d'informer l'utilisateur de l'identité de la personne qui appelle. Par exemple, le module transmettra par une liaison sans fil (liaison infrarouge ou radiofréquences) un signal comportant l'identifiant du numéro d'abonné appelant, lequel alors s'affichera sur l'écran IND2 de l'organe de commande portatif POR (figure 1A). Avantageusement, l'utilisateur peut alors interagir avec ce module dynamique 39 pour forcer le traitement de l'appel, via le bouton de commande 22 de l'organe de commande portatif POR. Par exemple, si l'utilisateur refuse de prendre les appels d'un correspondant particulier, ou si encore il souhaite modifier l'indication de sa disponibilité auprès du système selon l'invention, il transmet, via l'organe de commande POR et le module de pilotage dynamique 39, sa requête pour orienter l'appel vers le module d'accueil, ou simuler une non-réponse ou une occupation de la ligne, sans décrocher le combiné du poste téléphonique. Bien entendu, l'utilisateur peut commander ces fonctions directement à partir de son poste téléphonique P1, par exemple à partir du bouton de commande 21 comme indiqué ci-avant, ou encore à partir du clavier du poste téléphonique. Ainsi, l'on comprendra que le module de pilotage dynamique 39 est agencé pour renvoyer au module d'aiguillage 37 une information qui indique comment traiter l'appel. Il peut par exemple lui transmettre une information d'orientation d'appel vers le module d'accueil vocal 33, ou encore vers un numéro de renvoi prédéterminé, sur simple commande de l'utilisateur à partir de son organe portatif POR ou de son poste téléphonique P1.

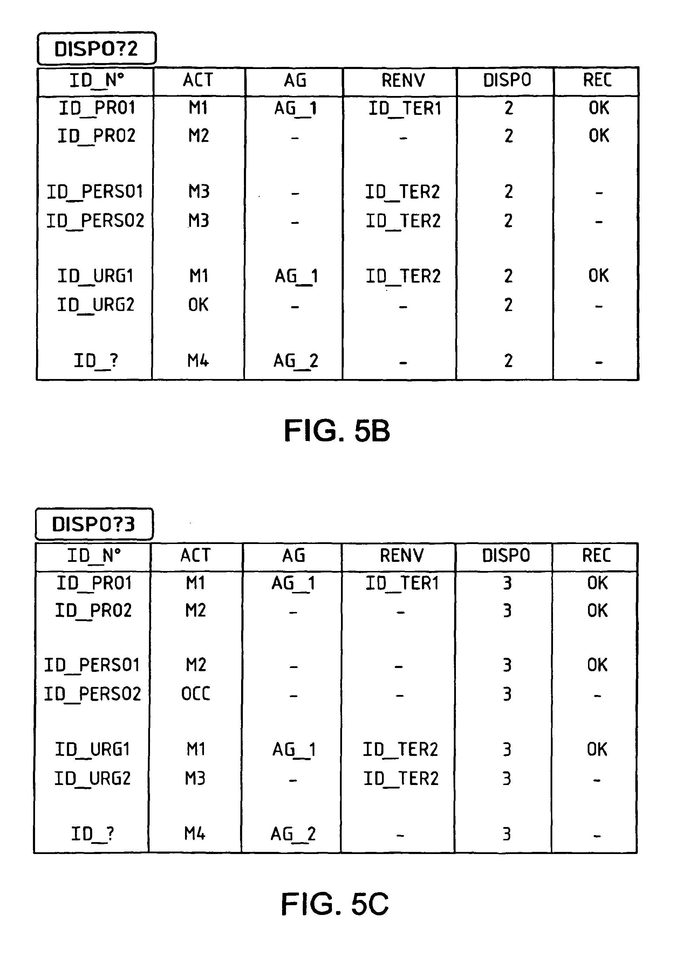

Le module de gestion des contacts 36 permet au professionnel de gérer notamment sa liste de contacts téléphoniques (liste de numéros d'abonnés choisis), ainsi qu'une liste de messages d'accueil vocal adéquats en fonction des numéros d'appelants et surtout en fonction de son état de disponibilité choisi, comme on le verra plus loin. En particulier, il peut être prévu, dans une disponibilité programmée, de ne pas filtrer les appels émanant de postes téléphoniques P2 identifiés dans la liste précitée et en revanche de délivrer un message d'accueil vocal adapté pour des appels émanant d'autres postes téléphoniques non identifiés, comme on le verra plus loin en référence aux figures 5A, 5B et 5C.

Le module d'enregistrement des messages 38 permet d'enregistrer des messages vocaux laissés par les appelants.

Le module de prise de rendez-vous automatique 35 est agencé pour coopérer avec la mémoire MEM du micro-ordinateur PC pour consulter l'agenda électronique de l'utilisateur. Il permet à l'appelant de prendre un rendez-vous dans une plage horaire libre de cet agenda électronique. Dans une variante moins sophistiquée, le module 35 peut être remplacé par une société de télé-secrétariat.

Dans ce premier mode de réalisation, la gestion des états de disponibilité est basée sur un nombre fini d'états :
- "*tous les appels*" : l'utilisateur prend tous les appels et il n'y a aucun filtrage ;
- "*certains appels*" : l'utilisateur ne prend que les appels provenant de numéros d'abonnés qui sont dans la liste des numéros d'abonnés choisis, tandis que les autres appels sont filtrés ; et
- "*aucun appel*" : l'utilisateur ne prend aucun appel et tous les appels sont filtrés.

Pour chaque état de disponibilité, l'utilisateur du système selon l'invention peut enregistrer une annonce choisie :
- "*certains appels*" : le professionnel de santé est présent mais son activité (consultation ou autre) lui interdit sur le moment de prendre l'appel ;
- "*aucun appel*" : le professionnel est absent ou indisponible et le message peut indiquer en outre les horaires d'ouverture ou de fermeture du cabinet médical dans lequel exerce le professionnel de santé.

En se référant maintenant à la figure 2B, dans le premier mode de réalisation, ce répondeur téléphonique n'est doté que d'un seul accès au réseau téléphonique. Le module d'aiguillage 37 est alors agencé pour orienter simplement l'appel vers le poste téléphonique local du professionnel ou simplement vers le module d'accueil vocal 33 (référence REP/REC de la figure 2B). Si l'état de disponibilité sélectionné correspond à "*tous les appels*" ou "*certains appels*" pour des numéros d'abonnés présélectionnés, les appels entrants sont acheminés vers le poste téléphonique du professionnel (flèche F1 de la figure 2B).

Dans le cas où l'état de disponibilité sélectionné correspond à "*aucun appel*" ou "*certains appels*" et si l'appelant ne fait pas partie de la liste précitée, les appels entrants sont acheminés vers le module d'accueil vocal qui délivre une annonce contextuelle qui est fonction de l'état de disponibilité sélectionné (flèche F2 de la figure 2B). Le cas échéant, le module d'accueil vocal 33 autorise ou non l'appelant à enregistrer un message via le module d'enregistrement 38.

A titre d'exemple, un professionnel de santé peut être en consultation dans son cabinet. En l'absence d'assistante pour prendre des appels, il désire recevoir tous les appels téléphoniques si de nombreux patients appellent pour prendre rendez-vous ou pour discuter de résultats d'analyses. Il déclare donc un état de disponibilité correspondant à "*tous les appels*". Ainsi, les appels de tous ses correspondants lui seront présentés.

Cependant, toute son attention peut être concentrée sur une consultation en cours lorsqu'il procède à un examen clinique. Ainsi, lorsqu'un appel se présente, l'organe de commande portatif POR, à disposition du professionnel de santé, signale au professionnel qu'un appel attend une suite à donner. A cet effet, le module de pilotage dynamique 39 initie alors la communication entre l'ordinateur PC et l'organe de commande portatif POR. Le professionnel de santé lit sur l'écran IND2 le numéro d'abonné (et éventuellement le nom de l'appelant). Il décide alors de prendre l'appel ou de ne pas répondre et, dans ce dernier cas, son correspondant est accueilli par le module d'accueil vocal 33. A cet effet, le professionnel de santé actionne le bouton 22 de l'organe de commande portatif POR, soit pour prendre l'appel sur son poste P1, soit pour transférer l'appel au module d'accueil vocal 33, par exemple avant même que le poste téléphonique P1 n'indique par une sonnerie la présence d'un appel entrant.

On se réfère maintenant à la figure 3A pour décrire un seconde mode de réalisation du système selon l'invention, le répondeur professionnel étant réalisé sous la forme d'une messagerie vocale sur un réseau téléphonique public ou privé. Typiquement, par adaptation logicielle des équipements téléphoniques du réseau public (centraux téléphoniques, équipements périphériques ou "*réseaux intelligents*"), ou encore des réseaux privés (de type PABX), le système selon l'invention peut comporter une pluralité de lignes téléphoniques en entrée et en sortie.

Pour assurer le transfert d'appels vers d'autres lignes, le système selon l'invention comporte en outre un module de gestion des renvois d'appels 41 (figure 3A) correspondant au module de renvoi automatique d'appels précité (RENV). Ce module 41 permet au professionnel de définir des renvois d'appels vers des numéros de téléphone externes prédéterminés. Un numéro de renvoi pourra être associé à chaque état de disponibilité, comme on le verra plus loin.

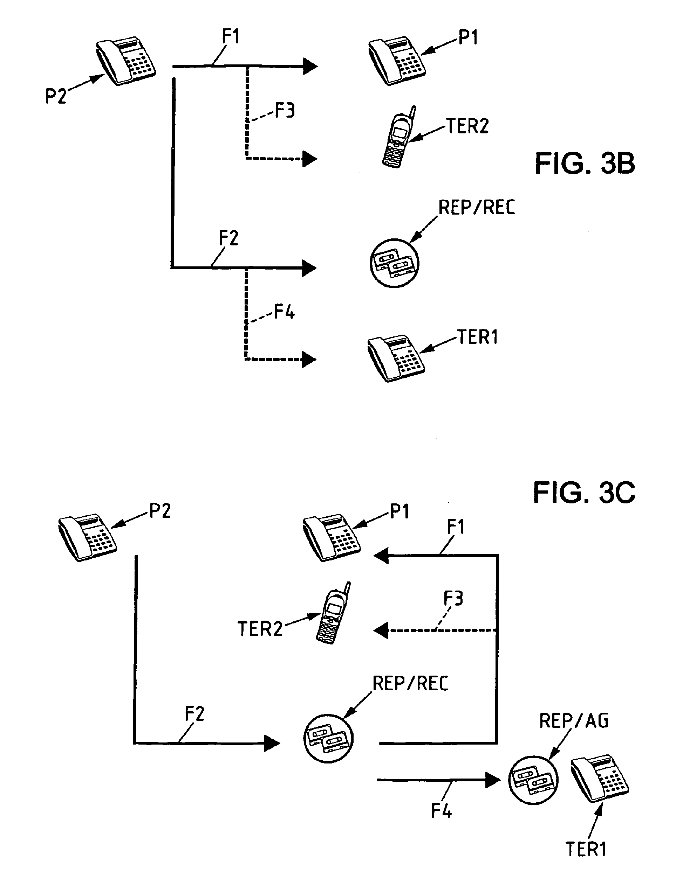

En se référant à la figure 3B, dans un état de disponibilité "*tous les appels*" ou "*certains appels*" si l'appelant fait partie de la liste de numéros d'abonnés choisis, les appels entrants sont acheminés normalement vers le poste P1 (flèche F1).

De plus, si le professionnel a indiqué un numéro d'abonné vers lequel devraient être acheminés les appels qu'il désire recevoir (flèche F3), les appels entrants sont acheminés vers un terminal téléphonique TER2 correspondant à ce numéro et à disposition du professionnel de santé.

Ce numéro d'abonné du terminal TER2 peut avantageusement correspondre à un numéro du terminal mobile dans un réseau radio-cellulaire, par exemple de type GSM.

Dans un état "*aucun appel*" ou "*certains appels*" et si l'appelant ne fait partie de la liste des numéros choisis, les appels sont acheminés vers le module d'accueil vocal 33 (flèche F2), si lé professionnel de santé n'a pas renvoyé le numéro d'abonné du terminal TER2 pour les autres appels entrants.

Dans cet état de disponibilité, les appels peuvent, en variante, être acheminés vers un numéro d'abonné d'un autre terminal, par exemple un poste téléphonique TER1 fixe, si le professionnel a renvoyé le numéro d'abonné du poste TER1, vers lequel sont acheminés les appels qu'il ne désire pas recevoir (flèche F4). Ce poste TER1 peut correspondre par exemple à celui de son secrétariat, ou encore à celui d'un collègue ou d'un confrère. Dans le cas de la flèche F2 où l'appelant est redirigé vers le module d'accueil vocal 33, le système peut diffuser une annonce et proposer à l'appelant de choisir parmi plusieurs options :
- insister pour que le professionnel prenne l'appel, dans un cas urgent ;
- demander à enregistrer un message ; ou
- demander à prendre un rendez-vous, en mettant en oeuvre le module de prise de rendez-vous automatique 35.

En se référant maintenant à la figure 3C, dans un autre état de disponibilité correspondant à "*certains appels si l'appelant ne fait pas partie de la liste de numéros choisis*", l'appelant peut avoir demandé à parler au professionnel. Si le professionnel n'a pas renvoyé le numéro vers lequel devraient être acheminés les appels qu'il désire recevoir, les appels entrants sont acheminés de façon habituelle vers le numéro appelé P1 (flèche F1). Si l'appelant a demandé à parler au professionnel et si ce dernier a en fait renvoyé le numéro vers le terminal mobile TER2 (flèche F3), les appels entrants sont acheminés vers le numéro d'abonné du terminal TER2.

Enfin, dans un état de disponibilité "*aucun appel*" ou "*certains appels si l'appelant ne fait pas partie de la liste des numéros choisis*", si l'appelant a demandé à prendre rendez-vous, il est transféré vers un module de prise de rendez-vous automatique 35, portant la référence REP/AG sur la figure 3C (flèche F4), ou encore, dans une variante, vers un poste téléphonique d'un télé-secrétariat (portant la référence TER1 sur la figure 3C).

Ainsi, on comprendra que le module d'accueil vocal 33 (référencé REP/REC sur les figures 2B, 3B et 3C) peut se présenter avantageusement sous la forme d'un serveur vocal "*intelligent*", proposant une pluralité d'options que l'appelant peut former en composant des touches particulières de son clavier, ou encore simplement en prononçant une option, tandis que le module 33 comporte une application logicielle et/ou matérielle de reconnaissance vocale.

En outre, le module de prise de rendez-vous 35 peut être réalisé sous la forme d'un dispositif externe qui dispose des agendas électroniques des professionnels, ou encore par une société de télé-secrétariat, comme indiqué ci-avant.

Le paramétrage du système est réalisé au préalable par chaque professionnel, en utilisant le module 40. Par exemple, par téléphone, l'utilisateur peut paramétrer le système si ce dernier dispose d'un serveur vocal qui permet au professionnel de piloter le système par commande vocale ou DTMF. Il peut aussi disposer d'un mécanisme de gestion de la signalisation qui permet au professionnel de piloter le système par des combinaisons de touches de son téléphone. Il peut encore disposer d'un serveur WAP qui permet au professionnel de piloter les systèmes par navigateur sur un téléphone mobile. Bien entendu, on comprendra que l'utilisateur peut lui-même programmer son ordinateur, ou encore passer par un serveur informatique permettant au professionnel de piloter les systèmes par un logiciel client dédié (navigateur WEB ou autres). Enfin, l'utilisateur peut encore piloter le système par un simple terminal tel qu'un Minitel ®.

On indique que le second mode de réalisation correspondant aux figures 3A à 3C est avantageusement adapté à l'usage des professionnels de santé. En effet, pour cette catégorie professionnelle, l'enregistrement systématique des messages des patients n'est pas nécessaire car les professionnels de santé engageraient leur responsabilité médicale, en particulier dans des cas d'urgence s'ils laissaient l'opportunité à des patients d'enregistrer un message vocal.

A titre d'exemple, un professionnel de santé est en consultation dans son cabinet et il attend un appel de l'un de ses confrères à qui il a confié un autre patient. S'il ne souhaite pas être dérangé par les autres appels, il déclare donc un état de disponibilité correspondant à "*certains appels*" et déclare dans sa liste des numéros choisis le numéro du professionnel de santé dont il attend l'appel. Ainsi, tous ses correspondants seront filtrés et accueillis par une annonce qui leur indique que le professionnel de santé est momentanément indisponible, à l'exception de son confrère dont l'appel est présenté au professionnel de santé.

Après cette consultation, le professionnel de santé n'a plus d'autres consultations mais il décide de rester dans son cabinet médical. Il est donc disponible pour prendre tous les appels. Il déclare donc un état de disponibilité correspondant à "*tous les appels*". Ainsi, les appels de tous ses correspondants lui seront présentés.

Enfin, lorsqu'il décide de quitter le cabinet, ne pouvant donc plus prendre d'appels téléphoniques, il déclare un état de disponibilité correspondant à "*aucun appel*". Tous les appels entrants seront filtrés et accueillis par une annonce vocale qui leur indique simplement que le cabinet est fermé et, le cas échéant, les horaires d'ouverture du cabinet.

Dans un autre exemple, le professionnel peut, en temps réel et en tapant sur une seule touche de son clavier téléphonique ou sur l'organe de commande portatif POR, dériver ses appels vers une messagerie indiquant qu'il est momentanément indisponible. Il peut toutefois continuer à recevoir des appels de certains correspondants (dont le numéro d'abonné est pré-enregistré sur ladite liste de numéros choisis) pour lesquels il souhaite toujours être joignable. La désactivation de l'orientation des appels vers la messagerie vocale est également possible en temps réel en tapant sur une touche de son poste ou de l'organe POR, comme indiqué précédemment.

On se réfère maintenant à la figure 4 pour décrire un mode de réalisation mixte entre le premier et le second mode de réalisation décrits ci-avant. Ce mode de réalisation s'appuie sur une messagerie qui est disponible dans un réseau et qui est pilotée directement ou indirectement par un équipement dédié ou adapté à cette fonction, comme par exemple un modem autonome ou un modem piloté par logiciel, du type décrit ci-avant.

La gestion des appels de disponibilité est basée sur un nombre fini d'états, tels que :
- "*tous les appels*" : le professionnel prend tous les appels et il n'y a aucun filtrage ;
- "*certains appels*" : le professionnel ne prend que des appels provenant de numéros présents sur la liste précitée de numéros choisis, tandis que les autres appels sont filtrés ; et
- "*aucun appel*" : le professionnel ne prend aucun appel et tous les appels sont filtrés.

Le professionnel peut enregistrer une annonce pour chaque état d'indisponibilité :
- "*certains appels*" : le professionnel est présent mais son activité lui interdit sur le moment de prendre l'appel ;
- "*aucun appel*" : le professionnel est absent.

Dans ce mode de réalisation, le module de gestion des annonces 32, le module d'accueil vocal 33 et le module d'enregistrement des messages 38 sont avantageusement constitués par une messagerie vocale distante, disponible sur le réseau commuté précité. Cette messagerie permet avantageusement d'enregistrer au moins deux annonces différentes qui seront activées en fonction de l'état de disponibilité sélectionné par l'utilisateur.

Les autres modules sont intégrés dans le micro-ordinateur PC à disposition de l'utilisateur. Le micro-ordinateur PC est agencé pour activer la messagerie vocale distante directement, par commande du modem qu'il comporte, ou encore indirectement (par signalisation à l'utilisateur d'un appel entrant). Le module d'accueil vocal 33, une fois activé, restitue une annonce d'accueil qui correspond à l'état de disponibilité sélectionné par l'utilisateur, ou encore d'une disponibilité déduite de l'agenda électronique que consulte à cet effet le module de prise de rendez-vous automatique 35.

A titre d'exemple, on équipe la ligne de l'utilisateur d'un filtre connu en soi qui, en fonction du contexte, laisse sonner l'appel sur le poste téléphonique, retourne un signal à l'appelant correspondant à une non-réponse de l'appelé sans solliciter toutefois le poste P1 de l'appelé ou retourne un signal d'occupation de la ligne à l'appelant. Le réseau téléphonique peut aussi orienter l'appel vers la messagerie vocale distante qui délivre une annonce lorsque le correspondant ne répond pas et une autre annonce lorsque le correspondant est occupé.

Ainsi, si le professionnel s'est déclaré dans l'état "*tous les appels*", le système installé chez le professionnel laisse sonner l'appel sur le poste téléphonique.

Si le professionnel s'est déclaré dans l'état "*aucun appel*", le système installé chez le professionnel ne répond pas à l'appel, lequel est alors aiguillé par le réseau téléphonique vers la messagerie distante qui délivre une annonce de "*non réponse*" signalant ainsi l'absence du professionnel.

Si le professionnel s'est déclaré dans l'état *"certains appels*" et si l'appel provient d'un numéro de la liste de numéros choisis par le professionnel, le système installé chez le professionnel laisse sonner l'appel sur le poste téléphonique. En revanche, si l'appel provient d'un numéro ne figurant pas sur la liste précitée, le système précité retourne un signal d'occupation au réseau téléphonique et l'appel est orienté par le réseau téléphonique vers la messagerie distante qui délivre une annonce d'occupation signalant une indisponibilité du professionnel.

On se réfère maintenant aux figures 5A, 5B et 5C, sur lesquelles on a représenté un exemple de page d'affichage sur l'écran ECR du micro-ordinateur PC lorsque l'utilisateur du système selon l'invention souhaite un paramétrage fin de ses états de disponibilité, notamment en fonction des numéros d'abonnés appelants.

En particulier, comme indiqué ci-avant, la mise en oeuvre du module de paramétrage 40 permet à l'utilisateur, d'une part, d'éditer la table de correspondance (ou une partie de la table dans les exemples représentés), de préférence sous la forme d'un tableau, et, d'autre part, de modifier les données de cette table de correspondance (suppression ou ajout d'un numéro de renvoi ou d'un numéro d'appelant, ou autres).

Dans l'exemple représenté sur ces figures 5A, 5B et 5C, la liste des numéros d'abonnés choisis précitée (pour le filtrage des appels en fonction de l'identité de l'appelant) comporte des identifiants de numéros d'abonnés ID_N°. Dans l'exemple décrit, cette liste comprend deux numéros d'abonné de confrères du professionnel de santé ID_PRO1 et ID_PRO2. La liste des numéros d'abonnés choisis comporte en outre deux numéros d'abonnés susceptibles d'appeler le professionnel de santé à titre personnel (famille, amis, ou autres) ID_PERSO1 et ID_PERSO2. Le cas échéant, le professionnel de santé peut en outre pratiquer dans un hôpital pour lequel il doit effectuer des gardes, ou encore pour un service médical d'urgence, dont les numéros d'abonnés respectifs sont ID_URG1 et ID_URG2.

Dans la table de correspondance TC, telle que représentée sur les figure 5A, 5B et 5C, l'identifiant ID_? correspond à un numéro d'abonné inconnu (non répertorié).

La colonne DISPO indique l'état de disponibilité sélectionné. On comprendra que les pages d'écran représentées sur les figures 5A, 5B et 5C correspondent en fait à des extraits de la table de correspondance TC et que l'ensemble de la table de correspondance comporte chacun des extraits représentés, ainsi qu'éventuellement d'autres extraits non représentés correspondants à d'autres états de disponibilité DISPO = 4, 5, etc.

Une seconde colonne ACT définit l'action à exécuter, en fonction de l'état de disponibilité DISPO sélectionné par l'utilisateur, mais aussi en fonction de l'identité de l'appelant.

La colonne AG définit une plage horaire à proposer dans un agenda électronique mémorisé dans le système selon l'invention.

La colonne RENV définit des numéros d'abonnés vers lesquels doivent être transférés les appels. Par exemple, dans le cas des figures 5A, 5B, 5C, les appels peuvent être renvoyés à un numéro d'abonné ID_TER1 (correspondant par exemple à un poste de secrétariat ou au poste d'un confrère ou d'un collègue), ainsi qu'un numéro d'abonné ID_TER2 correspondant par exemple au numéro d'abonné d'un terminal mobile à disposition du professionnel de santé.

Enfin, la colonne REC indique si un message peut être enregistré par l'appelant ou non.

Dans l'exemple de la figure 5A, le professionnel de santé a sélectionné l'état de disponibilité "*DISPO 1*", qui correspond à un état relativement libre du professionnel de santé.

L'action "*OK*" dans la colonne ACT indique que le poste téléphonique P1 du professionnel de santé peut sonner et que le professionnel de santé décrochera, en principe, le combiné du poste. Ainsi, si des confrères du professionnel de santé, ou encore des centres médicaux hospitaliers ou d'urgence cherchent à joindre le professionnel de santé, ce dernier pourra leur répondre en décrochant simplement le combiné de son poste P1.

En revanche, pour des appels personnels (émanant des postes identifiés par le numéro d'abonné ID_PERSO1 et/ou ID_PERSO2), le module d'accueil vocal délivre un message d'accueil M3 indiquant que le professionnel de santé peut être joint sur son terminal mobile (de numéro d'abonné ID_TER2) en activant par exemple simplement une touche du clavier du téléphone des appelants.

Enfin, lorsque le numéro d'abonné de l'appelant n'est pas répertorié dans la table de correspondance TC, un message M4 est délivré par exemple en indiquant les horaires d'ouverture du cabinet médical et en proposant une plage AG_2 de disponibilité du professionnel de santé en mettant en oeuvre le module de prise de rendez-vous automatique 35. Si l'appelant valide, par exemple à partir des touches de son clavier, une heure de rendez-vous qu'il choisit, cette heure de rendez-vous est mémorisée dans la mémoire MEM du micro-ordinateur PC et le professionnel de santé pourra consulter son agenda électronique pour connaître ses rendez-vous. On comprendra en particulier que la plage horaire indiquée AG_2 peut correspondre aux heures d'ouverture du cabinet médical, par exemple entre 9 heures et 18 heures, tandis que la plage horaire AG_1 peut s'étendre par exemple de 9 heures à 20 heures, lorsqu'il s'agit d'une urgence, comme on le verra plus loin.

On se réfère maintenant à la figure 5B pour décrire une table de correspondance pour laquelle a été sélectionné un état de disponibilité "*DISPO 2"* et qui correspond à un état de consultation en cours du praticien. Dans cet exemple, les appels personnels sont préférentiellement encore orientés vers le terminal mobile du professionnel de santé. De même, les appels de numéros d'abonnés inconnus sont orientés vers le module de prise de rendez-vous automatique, dans la plage horaire AG_2.

En revanche, pour un confrère dont l'identifiant est ID_PRO1, il est délivré le message M1 indiquant au professionnel de santé qu'il ne peut prendre pour l'instant l'appel en cours et proposant trois options :
- le confrère peut prendre un rendez-vous dans une plage horaire AG_1 (par exemple entre 9 heures et 20 heures), pour que le professionnel de santé rappelle l'appelant dans cette plage horaire ;
- le confrère peut joindre, en activant une touche de son clavier, un confrère exerçant dans le même cabinet médical que le professionnel de santé et dont le numéro d'abonné est ID_TER1 ; ou
- l'appelant peut laisser un message vocal (valeur "*REC*" à "*OK*").

Pour un autre confrère, d'identifiant ID_PRO2, il est délivré, dans l'exemple représenté, un message d'accueil M2 indiquant simplement que le professionnel de santé n'est pas disponible mais que l'appelant peut enregistrer un message vocal.

Le module de paramétrage 40, à disposition de l'usager, permet avantageusement de modifier la table de correspondance d'un état de disponibilité à l'autre. C'est ainsi que pour une même catégorie d'appelants, les paramètres de suite à donner à l'appel peuvent être modifiés d'un état de disponibilité à l'autre. Par exemple, pour les appels urgents émanant de centres hospitaliers ou de services d'urgence, le message M1 du type décrit ci-avant peut être prévu pour le numéro d'appelant ID_URG1 (avec toutefois un renvoi automatique d'appel vers le terminal mobile du professionnel de santé, de numéro d'abonné ID_TER2), tandis que pour le numéro d'abonné de l'appelant ID_URG2, le poste téléphonique P1 du professionnel de santé sonnera jusqu'à ce que l'appelé décroche son combiné.

On se réfère maintenant à la figure 5C, pour décrire le contenu d'une table de correspondance pour un état de disponibilité "*DISPO 3*" correspondant à la situation dans laquelle le professionnel de santé se trouve lorsqu'il traite un cas particulièrement urgent nécessitant toute son attention. Ainsi, tous les appels sont transférés vers le module d'accueil vocal, à l'exception d'un appel personnel émanant du numéro d'abonné ID_PERSO2, pour lequel le module d'aiguillage simule une occupation de la ligne (valeur de la colonne "*ACT*" à "*OCC*"). En outre, on remarquera que les renvois d'appels vers le terminal mobile du pratiquant sont maintenant inactifs, sauf pour les appels émanant de centres d'urgence (ID_URG1 et ID_URG2).

Bien entendu, le professionnel de santé peut modifier un paramètre associé à un numéro d'abonné dans la liste des numéros d'abonnés choisis, ou encore ajouter un numéro d'abonné, ou encore supprimer un numéro de la liste. Il peut modifier aussi la suite à donner à un appel émanant d'un numéro particulier, en fonction d'un état de disponibilité prédéterminé.

Toutefois, dans la pratique courante, le professionnel de santé transmet simplement à son micro-ordinateur PC (via l'organe de commande portatif POR, ou encore à partir du clavier du poste téléphonique P1), un état de disponibilité en cours ("*libre*", "*en consultation*" ou "*en consultation urgente*"). A partir de cette simple sélection, une réponse appropriée du système selon l'invention sera donnée à un appel répertorié ou non dans la liste des numéros d'abonnés choisis.

Ainsi, le système au sens de la présente invention permet :
- d'accueillir les correspondants en délivrant automatiquement un message adapté en fonction de l'activité en cours de l'appelé. Par exemple, le message peut indiquer au correspondant que le cabinet de leur médecin est fermé ou bien que leur médecin est en consultation et qu'il lui est difficile de prendre l'appel ;
- de filtrer les appels pour différencier les appels de prise de rendez-vous des appels urgents (par exemple émanant de confrères ou d'appels personnels), ce qui permet à certains patients de passer outre le filtrage lorsque leur pathologie nécessite une attention particulière ou urgente ;
- d'aiguiller automatiquement les personnes vers un poste téléphonique approprié lorsqu'un appelant souhaite joindre le professionnel de santé ou un confrère de ce professionnel de santé. Dans ce cas, le transfert automatique d'appel vers le terminal mobile du professionnel de santé, ou encore vers son poste téléphonique personnel, peut être envisagé.

On indique toutefois que l'invention peut s'appliquer à d'autres types de profession, notamment pour accueillir des appelants en délivrant un message spécifique (messages personnels aux membres de la famille et aux amis/messages professionnels indiquant les heures d'ouverture de bureaux ou d'entreprises).

Bien entendu, la présente invention ne se limite pas à la forme de réalisation décrite ci-avant à titre d'exemples ; elle s'étend à d'autres variantes.

Ainsi, on comprendra que les modules tels que représentés sur les figures 2A, 3A et 4 peuvent être séparés et à distance (services proposés dans un réseau externe : module d'accueil vocal ou autre). On comprendra en outre que certains de ces modules peuvent être remplacés par des services de télé-secrétariat, physiques.

Par ailleurs, on comprendra que l'organe de commande portatif POR peut se présenter sous la forme d'un terminal mobile, ce qui permet à l'utilisateur du système selon l'invention de prendre une communication à partir de l'activation d'un bouton de commande de l'organe POR prévu à cet effet.

## Revendications

1. Système de gestion d'appels téléphoniques entrants, comportant :
- au moins une ligne téléphonique (4) pour recevoir des appels entrants,
- un module d'accueil vocal (33), et
- un module d'aiguillage (37) des appels entrants vers le module d'accueil vocal,
**caractérisé en ce qu'**il comporte en outre :
- un module mémoire (MEM) pour stocker une table de correspondance (36) définissant, pour chaque état d'une liste d'états prédéterminés de disponibilité dudit destinataire, si chacun des abonnés d'une liste d'abonnés est autorisé à appeler ledit destinataire dans un état de disponibilité donné et, dans le cas contraire, identifiant un message d'annonce vocale (M1, M2, M3, M4) correspondant à cet état de disponibilité donné et à cet abonné,
- un module de sélection (31), programmable, pour sélectionner un état de disponibilité dans ladite liste des états, et
- un module de décision (34) agencé pour, conformément à la table de correspondance définie pour l'état de disponibilité sélectionné, déterminer en cas d'appel entrant si l'abonné appelant est autorisé à appeler et, dans la négative, aiguiller l'appel entrant vers le module d'accueil vocal en vue de diffuser un message d'annonce vocale correspondant à l'état de disponibilité sélectionné et à l'abonné appelant,
et **en ce qu'**il comporte en outre un moyen de signalisation (IND1; IND2) du numéro d'abonné d'un appel entrant à un destinataire dudit appel entrant, pour mettre en oeuvre un mode de pilotage dynamique (39) consistant, sur commande du destinataire, à renvoyer au module d'aiguillage une information qui indique comment traiter un appel entrant.

2. Système selon la revendication 1, **caractérisé en ce que** le module mémoire comporte en outre au moins un jeu de données d'instructions du module d'aiguillage, stocké en correspondance d'un état de disponibilité, et **en ce que** le module de décision est agencé pour coopérer avec le module d'aiguillage pour simuler une occupation ou une non réponse de la ligne téléphonique en fonction d'un état de disponibilité sélectionné correspondant.

3. Système selon l'une des revendications 1 et 2, **caractérisé en ce que** le module mémoire comporte en outre au moins un jeu de données d'instructions du module d'aiguillage, stocké en correspondance d'un état de disponibilité, et **en ce que** le module de décision est agencé pour coopérer avec le module d'aiguillage pour désactiver le module d'accueil vocal en fonction d'un état de disponibilité sélectionné correspondant.

4. Système selon l'une des revendications précédentes, **caractérisé en ce qu'**il comporte en outre un module d'identification de numéros d'abonnés d'appels entrants (34), **en ce que** la table de correspondance comprend en outre au moins un numéro d'abonné (ID_N DEG), stocké en correspondance d'au moins un état de disponibilité, et **en ce que** le module de décision est agencé pour piloter le module d'aiguillage et/ou le module d'accueil vocal en fonction du numéro d'abonné d'un appel entrant et d'un état de disponibilité sélectionné correspondant.

5. Système selon l'une des revendications précédentes, **caractérisé en ce qu'**il comporte en outre un organe de commande (POR, P1) du module de sélection, activable à distance par un utilisateur du système de gestion.

6. Système selon l'une des revendications précédentes, **caractérisé en ce qu'**il comporte en outre un module (38) d'enregistrement de messages d'appelants, **en ce que** le module mémoire comporte en outre au moins un jeu de données d'instructions du module d'aiguillage, stocké en correspondance d'un état de disponibilité, et **en ce que** le module de décision est agencé pour coopérer avec le module d'aiguillage pour activer, dans un premier temps, le module d'accueil vocal en fonction d'un état de disponibilité sélectionné et correspondant à l'identifiant d'un message d'annonce vocale invitant l'appelant à enregistrer un message sonore et, dans un second temps, le module enregistreur pour enregistrer ledit message sonore de l'appelant.

7. Système selon l'une des revendications précédentes, **caractérisé en ce que** le module mémoire comporte en outre une pluralité de jeux de données d'instructions du module d'aiguillage, stockés en correspondance d'au moins un état de disponibilité et d'une pluralité d'identifiants de codes prédéterminés respectifs, et **en ce que** le module de décision est agencé pour coopérer avec le module d'aiguillage:
- pour orienter l'appel entrant, dans un premier temps, vers le module d'accueil vocal en fonction d'un état de disponibilité sélectionné et correspondant à l'identifiant d'un message d'annonce vocale invitant un appelant à formuler un choix parmi une liste de choix possibles et correspondant à un code sélectionné parmi lesdits codes prédéterminés, et
- pour activer, dans un second temps, un jeu d'instructions correspondant audit code sélectionné.

8. Système selon la revendication 7, **caractérisé en ce que** ladite liste de choix possibles correspond à une liste de plages horaires libres (AG_1, AG_2) du destinataire de l'appel, et **en ce que** l'activation dudit jeu d'instructions (35) correspondant au code sélectionné comprend la mémorisation dans le module mémoire d'une plage horaire sélectionnée par l'appelant.

9. Système selon l'une des revendications précédentes, **caractérisé en ce qu'**il comporte en outre un module de renvoi automatique d'appels (41), **en ce que** le module mémoire comporte en outre au moins un jeu de données d'instructions du module de renvoi automatique d'appels, **en ce que** la table de correspondance comprend au moins un identifiant d'un numéro d'abonné d'un terminal distant et stocké en correspondance d'un état de disponibilité, et **en ce que** le module de décision est agencé pour coopérer avec le module de renvoi automatique d'appels pour renvoyer un appel entrant vers un terminal distant en fonction d'un état de disponibilité sélectionné correspondant.

10. Système selon l'une des revendications précédentes, **caractérisé en ce qu'**il comporte en outre un module de paramétrage (40) de données mémorisées dans la table de correspondance, activable par le destinataire pour modifier lesdites données.

## Claims

1. System for managing incoming telephone calls, comprising:
- at least one telephone line (4) for receiving incoming calls,
- a voice greeting module (33), and
- a module (37) for switching incoming calls to the voice greeting module,
**characterized in that** it also comprises:
- a memory module (MEM) for storing a mapping table (36) defining, for each state of a list of predetermined availability states of said recipient, whether each of the subscribers in a list of subscribers is authorized to call said recipient in a given availability state and, if not, identifying a voice announcement message (M1, M2, M3, M4) corresponding to this given availability state and to this subscriber,
- a programmable selection module (31), for selecting an availability state from said list of states, and
- a decision module (34) designed to, in accordance with the mapping table defined for the selected availability state, determine, in the case of an incoming call, whether the calling subscriber is authorized to call and, if not, switch the incoming call to the voice greeting module in order to broadcast a voice announcement message corresponding to the selected availability state and to the calling subscriber,
and **in that** it also comprises a signalling means (IND1; IND2) for signalling the subscriber number of an incoming call to a recipient of said incoming call, in order to implement a dynamic control mode (39) consisting, upon a command from the recipient, in returning to the switching module an information item that indicates how to process an incoming call.

2. System according to Claim 1, **characterized in that** the memory module also includes a set of instruction data for the switching module, stored correlated to an availability state, and **in that** the decision module is designed to cooperate with the switching module to simulate a busy condition on or a nonresponse from the telephone line according to a corresponding selected availability state.

3. System according to one of Claims 1 and 2, **characterized in that** the memory module also includes at least one set of instruction data for the switching module, stored correlated to an availability state, and **in that** the decision module is designed to cooperate with the switching module to deactivate the voice greeting module according to a corresponding selected availability state.

4. System according to one of the preceding claims, **characterized in that** it also comprises a module for identifying incoming call subscriber numbers (34), **in that** the mapping table also includes at least one subscriber number (ID_N DEG), stored correlated to at least one availability state, and **in that** the decision module is designed to control the switching module and/or the voice greeting module according to the subscriber number of an incoming call and a corresponding selected availability state.

5. System according to one of the preceding claims, **characterized in that** it also comprises a control unit (POR, P1) of the selection module, which can be remotely activated by a user of the management system.

6. System according to one of the preceding claims, **characterized in that** it also comprises a module (38) for recording messages from callers, **in that** the memory module also includes at least one set of instruction data for the switching module, stored correlated to an availability state, and **in that** the decision module is designed to cooperate with the switching module to activate, firstly, the voice greeting module according to a selected availability state and corresponding to the identifier of a voice announcement message prompting the caller to record an audio message and, secondly, the recording module for recording said audio message from the caller.

7. System according to one of the preceding claims, **characterized in that** the memory module also includes a plurality of sets of instruction data for the switching module, stored correlated to at least one availability state and a plurality of identifiers of respective predetermined codes, and **in that** the decision module is designed to cooperate with the switching module;
- to direct the incoming call, firstly, to the voice greeting module according to a selected availability state and corresponding to the identifier of a voice announcement message prompting a caller to make a choice from a list of possible choices and corresponding to a code selected from said predetermined codes, and
- to activate, secondly, a set of instructions corresponding to said selected code.

8. System according to Claim 7, **characterized in that** said list of possible choices corresponds to a list of free time bands (AG_1, AG_2) for the recipient of the call, and **in that** the activation of said set of instructions (35) corresponding to the selected code includes the storage in the memory module of a time band selected by the caller.

9. System according to one of the preceding claims, **characterized in that** it also comprises an automatic call forwarding module (41), and **in that** the memory module also includes at least one set of instruction data for the automatic call forwarding module, **in that** the mapping table includes at least one identifier of a subscriber number of a remote terminal stored correlated to an availability state, and **in that** the decision module is designed to cooperate with the automatic call forwarding module to forward an incoming call to a remote terminal according to a corresponding selected availability state.

10. System according to one of the preceding claims, **characterized in that** it also comprises a module (40) for configuring data stored in the mapping table, which can be activated by the recipient to modify said data.

## Patentansprüche

1. System zur Verwaltung eingehender Telefonanrufe, das aufweist:
- mindestens eine Telefonleitung (4), um eingehende Anrufe zu empfangen,
- ein Sprachannahmemodul (33), und
- ein Umleitmodul (37) der eingehenden Anrufe zum Sprachannahmemodul,
**dadurch gekennzeichnet, dass** es außerdem aufweist:
- ein Speichermodul (MEM), um eine Entsprechungstabelle (36) zu speichern, die für jeden Zustand einer Liste von vorbestimmten Verfügbarkeitszuständen des Empfängers definiert, ob jeder der Teilnehmer einer Teilnehmerliste berechtigt ist, den Empfänger in einem gegebenen Verfügbarkeitszustand anzurufen, und im gegenteiligen Fall eine Sprachansagemitteilung (M1, M2, M3, M4) identifiziert, die diesem gegebenen Verfügbarkeitszustand und diesem Teilnehmer entspricht,
- ein programmierbares Auswahlmodul (31), um einen Verfügbarkeitszustand in der Liste der Zustände auszuwählen, und
- ein Entscheidungsmodul (34), das eingerichtet ist, um entsprechend der für den ausgewählten Verfügbarkeitszustand definierten Entsprechungstabelle im Fall eines eingehenden Anrufs zu bestimmen, ob der anrufende Teilnehmer berechtigt ist, anzurufen, und, falls nicht, den eingehenden Anruf zum Sprachannahmemodul umzuleiten, um eine Sprachansagemitteilung entsprechend dem ausgewählten Verfügbarkeitszustand und dem anrufenden Teilnehmer auszusenden,
und dass es außerdem eine Anzeigeeinrichtung (IND1; IND2) der Teilnehmernummer eines eingehenden Anrufs an einen Empfänger des eingehenden Anrufs aufweist, um einen dynamischen Steuermodus (39) anzuwenden, der darin besteht, auf Befehl des Empfängers an das Umleitmodul eine Information zurückzusenden, die angibt, wie ein eingehender Anruf zu behandeln ist.

2. System nach Anspruch 1, **dadurch gekennzeichnet, dass** das Speichermodul außerdem mindestens einen Anweisungsdatensatz des Umleitmoduls aufweist, der entsprechend einem Verfügbarkeitszustand gespeichert ist, und dass das Entscheidungsmodul eingerichtet ist, um mit dem Umleitmodul zusammenzuwirken, um einen Besetztzustand oder keine Antwort der Telefonleitung in Abhängigkeit von einem entsprechenden ausgewählten Verfügbarkeitszustand zu simulieren.

3. System nach einem der Ansprüche 1 und 2, **dadurch gekennzeichnet, dass** das Speichermodul außerdem mindestens einen Anweisungsdatensatz des Umleitmoduls aufweist, der entsprechend einem Verfügbarkeitszustand gespeichert ist, und dass das Entscheidungsmodul eingerichtet ist, um mit dem Umleitmodul zusammenzuwirken, um das Sprachannahmemodul in Abhängigkeit von einem entsprechenden ausgewählten Verfügbarkeitszustand zu deaktivieren.

4. System nach einem der vorhergehenden Ansprüche, **dadurch gekennzeichnet, dass** es außerdem ein Identifikationsmodul von Teilnehmernummern eingehender Anrufe (34) aufweist, dass die Entsprechungstabelle außerdem mindestens eine Teilnehmernummer (ID_N DEG) enthält, die entsprechend mindestens einem Verfügbarkeitszustand gespeichert ist, und dass das Entscheidungsmodul eingerichtet ist, um das Umleitmodul und/oder das Sprachannahmemodul in Abhängigkeit von der Teilnehmernummer eines eingehenden Anrufs und von einem entsprechenden ausgewählten Verfügbarkeitszustand zu steuern.

5. System nach einem der vorhergehenden Ansprüche, **dadurch gekennzeichnet, dass** es außerdem ein Steuerorgan (POR, P1) des Auswahlmoduls aufweist, das von einem Benutzer des Verwaltungssystems fernbetätigt werden kann.

6. System nach einem der vorhergehenden Ansprüche, **dadurch gekennzeichnet, dass** es außerdem ein Aufzeichnungsmodul (38) von Anrufermitteilungen aufweist, dass das Speichermodul außerdem mindestens einen Anweisungsdatensatz des Umleitmoduls aufweist, der entsprechend einem Verfügbarkeitszustand gespeichert ist, und dass das Entscheidungsmodul eingerichtet ist, um mit dem Umleitmodul zusammenzuwirken, um zuerst das Sprachannahmemodul in Abhängigkeit von einem ausgewählten und der Kennung einer den Anrufer zur Eingabe einer Sprachmitteilung auffordernden Sprachansagemitteilung entsprechenden Verfügbarkeitszustand und zweitens das Aufzeichnungsmodul zu aktivieren, um die Sprachmitteilung des Anrufers aufzuzeichnen.

7. System nach einem der vorhergehenden Ansprüche, **dadurch gekennzeichnet, dass** das Speichermodul außerdem mehrere Anweisungsdatensätze des Umleitmoduls aufweist, die entsprechend mindestens einem Verfügbarkeitszustand und mehreren Kennungen jeweiliger vorbestimmter Codes gespeichert sind, und dass das Entscheidungsmodul eingerichtet ist, um mit dem Umleitmodul zusammenzuwirken:
- um den eingehenden Anruf zuerst in Abhängigkeit von einem ausgewählten und der Kennung einer Sprachansagemitteilung, die einen Anrufer auffordert, eine Auswahl unter einer Liste von möglichen und einem ausgewählten Code unter den vorbestimmten Codes entsprechenden Auswahlmöglichkeiten zu formulieren, entsprechenden Verfügbarkeitszustand zum Sprachannahmemodul zu lenken und
- um zweitens einen Satz von Anweisungen zu aktivieren, der dem ausgewählten Code entspricht.

8. System nach Anspruch 7 **dadurch gekennzeichnet, dass** die Liste von Auswahlmöglichkeiten einer Liste von freien Zeitbereichen (AG_1, AG_2) des Empfängers des Anrufs entspricht, und dass die Aktivierung des Anweisungssatzes (35) entsprechend dem ausgewählten Code die Speicherung eines vom Anrufer ausgewählten Zeitbereichs im Speichermodul enthält.

9. System nach einem der vorhergehenden Ansprüche, **dadurch gekennzeichnet, dass** es außerdem ein Modul der automatischen Anrufweiterschaltung (41) aufweist, dass das Speichermodul außerdem mindestens einen Anweisungsdatensatz des Moduls der automatischen Anrufweiterschaltung aufweist, dass die Entsprechungstabelle mindestens eine Kennung einer Teilnehmernummer eines fernen Endgeräts enthält, die entsprechend einem Verfügbarkeitszustand gespeichert ist, und dass das Entscheidungsmodul eingerichtet ist, um mit dem Modul der automatischen Anrufweiterschaltung zusammenzuwirken, um einen eingehenden Anruf in Abhängigkeit von einem entsprechenden ausgewählten Verfügbarkeitszustand zu einem fernen Endgerät weiterzuleiten.

10. System nach einem der vorhergehenden Ansprüche, **dadurch gekennzeichnet, dass** es außerdem ein Parametriermodul (40) von in der Entsprechungstabelle gespeicherten Daten aufweist, das vom Empfänger aktivierbar ist, um die Daten zu verändern.
